Europäisches Patentamt

European Patent Office

Office européen des brevets

(11) Publication number: **0 268 914**
**A2**

# EUROPEAN PATENT APPLICATION

(21) Application number: 87116496.8

(22) Date of filing: 09.11.87

(51) Int. Cl.⁴: **F02B 27/02**

(30) Priority: **11.11.86 IT 4100586**

(43) Date of publication of application:
**01.06.88 Bulletin 88/22**

(84) Designated Contracting States:
**DE ES FR GB IT SE**

(71) Applicant: **Nicchio, Ivano**
**Località Portaiolo, 4/A**
**I-28040 Mergozzo (Prov. of Novara)(IT)**

(72) Inventor: **Nicchio, Ivano**
**Località Portaiolo, 4/A**
**I-28040 Mergozzo (Prov. of Novara)(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Device for controlling the flow of the aspirated air or mixture for internal combustion engines.**

(57) The present invention relates to a device for controlling the flow of the aspirated air or mixture for internal combustion engines. The device (1) comprises at least one first induction duct (2) and at least one second induction duct (3) which are connected to the combustion chamber (4) of a cylinder (5) of the engine through at least one induction port (6) controlled by a valve (7). First non-return valve means (9) openable upon depression upon the induction of air or mixture into the combustion chamber (4) are provided in said second induction duct (3). Second controllably actuatable or deactuatable valve means (10) for the cutoff of the air or mixture are provided in said first induction duct (2).

Fig.1

EP 0 268 914 A2

# DEVICE FOR CONTROLLING THE FLOW OF THE ASPIRATED AIR OR MIXTURE FOR INTERNAL COMBUSTION ENGINES

The present invention relates to a device for controlling the flow of the aspirated air or mixture for internal combustion engines.

As is known, in internal combustion engines, both of the Otto cycle type and of the Diesel cycle type, with a low rpm, a considerable loss of torque occurs due to the fact that at the end of the induction stroke, part of the air or mixture, already aspirated into the combustion chamber, is pushed back into the induction duct by the piston which begins the compression stroke before the complete closure of the valve which controls the related induction port. This phenomenon, known by the name of "backup", by reducing the amount of mixture or air actually present in the combustion chamber at combustion time, considerably decreases the torque available at the engine shaft.

At a high rpm, this phenomenon of the backup of the aspirated air or mixture does not occur since the aspirated air or mixture has a greater speed of entry into the combustion chamber and therefore a greater inertia, which effectively contrasts a reversal of its direction of motion.

In some engines, in order to avoid the phenomenon of the backup of the aspirated air or mixture, non-return valve means have been provided on the feed duct and open upon depression. Said valve means, consisting of one or more flap valves, open during the induction stroke so as to allow the regular filling of the combustion chamber, and close at the end of said stroke, before the closure of the induction port, thus preventing the return of the aspirated air or mixture along the induction duct.

The adoption of flap valves on the induction duct, though it allows to keep the torque of the engine at good levels at a low rpm, penalizes the torque at a high rpm since it causes considerable losses of load when the speed of the air or mixture in the induction duct is high.

The aim of the present invention is to solve the above described problem by providing a device for controlling the flow of the aspirated air or mixture which effectively prevents the phenomenon of the backup of the air or mixture at a low rpm without penalizing the performance of the engine at a high rpm.

Within the scope of this aim, an object of the invention is to provide a device which is easy to apply both to Otto cycle engines and to Diesel cycle engines.

Another object of the invention is to provide a device which has high operating reliability without requiring frequent interventions for maintenance.

This aim, as well as these and other objects which will become apparent hereinafter, are achieved by a device for controlling the flow of the aspirated air or mixture for internal combustion engines, characterized in that it comprises at least one first induction duct and at least one second induction duct connected to the combustion chamber of a cylinder of the engine through at least one induction port controlled by a valve, in said second induction duct there being provided first non-return valve means openable upon depression upon the induction of the air or mixture into said combustion chamber, second controllably actuatable valve means for the cutoff of the air or mixture being provided in said first induction duct.

Further characteristics and advantages of the invention will become apparent from the detailed description of a preferred, but not exclusive, embodiment of the device according to the invention, illustrated only by way of non-limitative example in the accompanying drawings, wherein:

figures 1 to 3 are schematic cross section views of the device according to the invention applied to an engine of which only part of a cylinder has been illustrated, more precisely:

figure 1 illustrates the operation of the device with the engine at a low rpm during the induction stroke;

figure 2 illustrates the operation of the device with the engine at a low rpm at the end of the induction stroke;

figure 3 illustrates the operation of the device with the engine at a high rpm during the induction stroke; and

figure 4 is a schematic view of a device for controlling the second valve means according to the invention.

With reference to the above described figures, the device according to the invention, generally indicated by the reference numeral 1, comprises at least one first induction duct 2 and at least one second induction duct 3 which are connected to the combustion chamber 4 of a cylinder 5 in a known engine. The first induction duct and the second induction duct are connected to the combustion chamber 4 through at least one induction port 6 controlled by a known valve 7 which is actuated in a known manner, for example by means of a cam. In the illustrated embodiment, the first and the second induction duct are arranged in output from a known carburettor 8, which is illustrated only schematically.

According to the invention, in the second induction duct 3 first non-return valve means are provided, openable upon depression, which consist of one or more known flap valves 9. Second valve means 10 for the cutoff of the air or mixture, controllably actuatable or deactuatable, are furthermore provided in the first induction duct 2.

The second valve means 10 consist of at least one throttle valve which is arranged in the first induction duct 2 and which can be operated manually or automatically, as will become apparent hereinafter.

Advantageously, the first induction duct 2 and the second induction duct 3 extend from a same duct and merge into a same duct upstream with respect to the induction port 6 according to the direction followed by the air or mixture in the induction stroke.

For the automatic operation of the second valve means 10, a control device 11 can be provided, schematically illustrated in figure 4, which comprises: a sensor 12 for detecting the rpm of the engine shaft 13 connected to a threshold control element 14 which operates an actuator 15 which in turn intervenes on the throttle valve 10, determining its opening or its closure depending on the number of rpm of the engine shaft.

The operation of the device according to the invention is as follows.

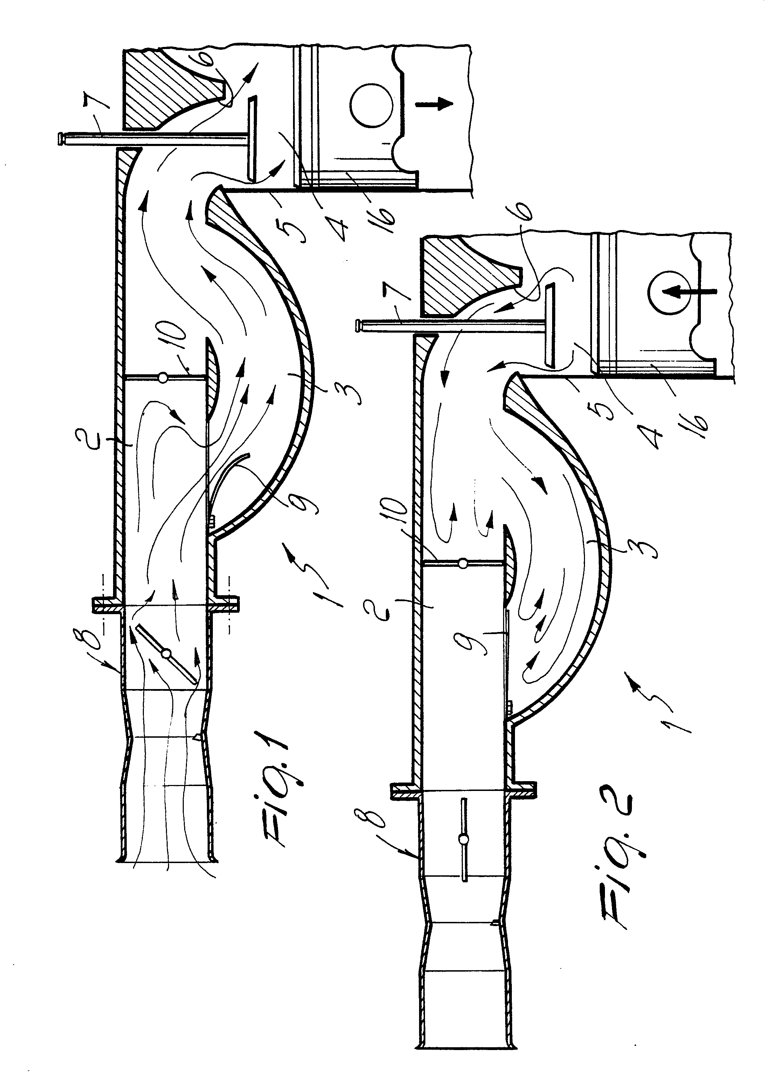

at a low rpm, the throttle valve 10 is kept in closed position. During the induction stroke, the flap valve 9 opens due to the depression caused by the motion of the piston 16 in the cylinder 5 and the air or mixture reaches the combustion chamber through the second induction duct 3 (figure 1). At the end of the induction stroke, as the depression ceases, the flap valve 9 closes, preventing the backup of the previously aspirated air or mixture (figure 2).

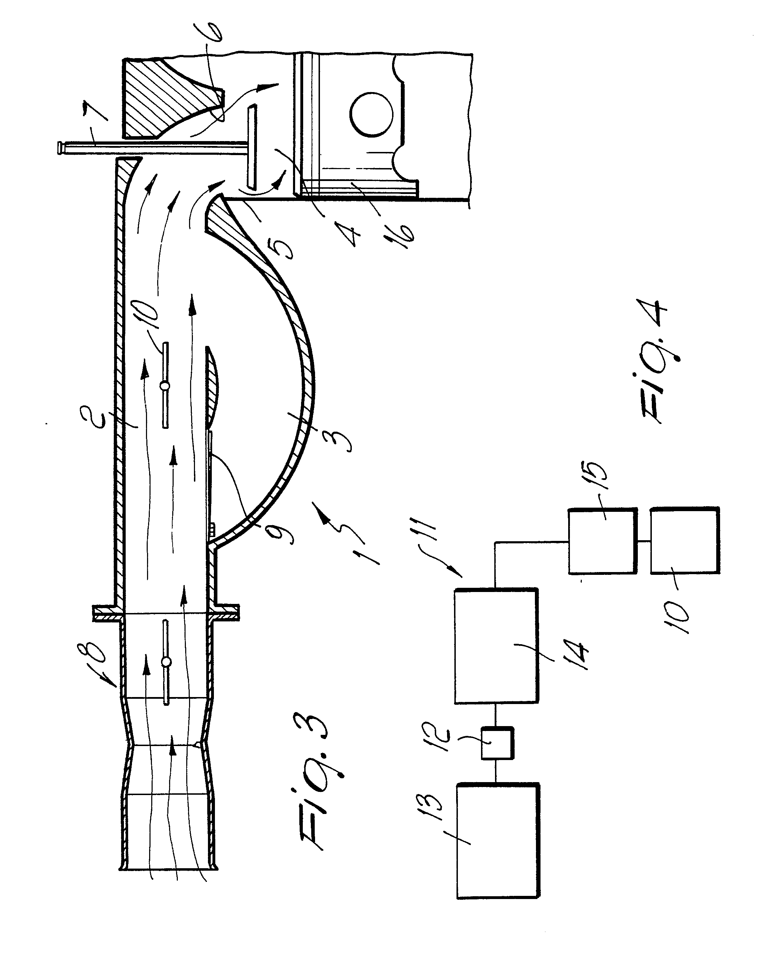

At a preset rpm of the engine shaft, the throttle valve 10 is opened and the air or mixture is aspirated prevailingly along the first induction duct 2, in which low load losses occur which do not significantly penalize the power of the engine even at a high rpm (figure 3).

In practice it has been observed that the device according to the invention fully achieves the intended aim since it eliminates the phenomenon of the backup of the air or mixture along the induction duct at a low rpm and does not penalize the power of the engine at a high rpm.

Another advantage resides in the fact that it can be applied in an extremely simple manner to Otto cycle engines or to Diesel cycle engines, even if fitted with a turbosupercharger.

The device thus conceived is susceptible to numerous modifications and variations, all of which are within the scope of the inventive concept; moreover, all the details may be replaced with technically equivalent elements.

In practice, the materials employed, as well as the dimensions, may be any according to the requirements and to the state of the art.

## Claims

1. Device for controlling the flow of the aspirated air or mixture for internal combustion engines, characterized in that it comprises at least one first induction duct (2) and at least one second induction duct (3) connected to the combustion chamber (4) of a cylinder (5) of the engine through at least one induction port (6) controlled by a valve (7), in said second induction duct (3) there being provided first non-return valve means (9) openable upon depression upon the induction of the air or mixture into said combustion chamber (4), second controllably actuatable valve means (10) for the cutoff of the air or mixture being provided in said first induction duct (2).

2. Device, according to claim 1, characterized in that said first induction duct (2) and said second induction duct (3) extend from a same duct and merge into a same duct upstream with respect to said induction port (6).

3. Device, according to claim 1, characterized in that said first valve means (9) consist of at least one flap valve (9) arranged in said second induction duct (3).

4. Device, according to claim 1, characterized in that said second valve means (10) consist of at least one throttle valve (10) arranged along said first induction duct (2).

5. Device, according to one or more of the preceding claims, characterized in that it comprises a device (11) for controlling said second valve means (10) according to the rpm of the engine.

0 268 914

Fig.1

Fig.2

Fig.3

Fig.4